Europäisches Patentamt

European Patent Office

Office européen des brevets

(19)

(11) **EP 1 464 948 A1**

(12) **EUROPÄISCHE PATENTANMELDUNG**

(43) Veröffentlichungstag:
06.10.2004  Patentblatt 2004/41

(51) Int Cl.⁷: **G01N 13/02**

(21) Anmeldenummer: 03007670.7

(22) Anmeldetag: 03.04.2003

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **Krüss GmbH Wissenschaftliche Laborgeräte**
**22453 Hamburg (DE)**

(72) Erfinder:
• **Zilles, Jörg Ulrich**
**22457 Hamburg (DE)**

• **Gerber, Carsten**
**22967 Tremsbüttel (DE)**
• **Arnason, Vignir**
**23847 Steinhorst (DE)**
• **Herrmann, Peter**
**20255 Hamburg (DE)**

(74) Vertreter: **Eisenführ, Speiser & Partner**
**Patentanwälte Rechtsanwälte**
**Zippelhaus 5**
**20457 Hamburg (DE)**

(54) **Blasendrucktensiometer**

(57)    Die Erfindung betrifft ein Verfahren und eine Vorrichtung zur Messung der dynamischen Oberflächenspannung einer Flüssigkeit nach der Methode des maximalen Blasendrucks. Die Erfindung zeichnet sich dadurch aus, dass zur Bestimmung des hydrostatischen Drucks der minimale Blasendruck unmittelbar gemessen wird.

Fig. 1

EP 1 464 948 A1

**Beschreibung**

Die vorliegende Erfindung betrifft ein Verfahren und eine Vorrichtung zur Messung der dynamischen Oberflächenspannung einer Flüssigkeit nach der Methode des maximalen Blasendrucks entsprechend den Oberbegriffen der Ansprüche 1 und 8, und eine Drossel nach dem Oberbegriff des Anspruchs 16 und ein Verfahren zur Herstellung einer Drossel nach dem Oberbegriff des Anspruchs 18.

Zum besseren Verständnis des technischen Hintergrundes der Erfindung sei zunächst auf die Wirkung von oberflächenaktiven Substanzen, wie beispielsweise Tensiden eingegangen. Die Wirkung von den Tensiden als oberflächenaktive Substanzen, beispielsweise als Reinigungsmittel in Waschlösungen oder in Entfetterlösungen zur Oberflächenreinigung, oder in Lacken und in anderen technischen Flüssigkeiten lässt sich aus dem Verhalten der Oberflächenspannung der jeweiligen Lösung bestimmen. Dabei unterscheidet man grundsätzlich zwischen der statischen Messung und der dynamischen Messung der Oberflächenspannung. Eine statische Messung der Oberflächenspannung wird vorrangig bei Tensidkonzentrationen unterhalb der kritischen Micellbildungskonzentration (CMC) angewendet. Bei hohen Tensidkonzentrationen lassen sich die typischen Eigenschaften der Tensidlösungen, beispielsweise die Konzentration und das Anlagerungsverhalten an Grenzflächen, nur noch mit einer Messung der dynamischen Oberflächenspannung hinreichend genau ermitteln. Zur dynamischen Bestimmung der Oberflächenspannung wird im Stand der Technik vorzugsweise die vorgenannte Methode des maximalen Blasendrucks angewandt.

Denn im Gegensatz zu anderen Messmethoden wie der Ring- oder Plattenmethode trägt die Blasendruckmethode den kinetischen Effekten innerhalb der Lösung Rechnung. Denn die Tenside benötigen einige Zeit, um an die jeweilige Grenzfläche zu diffundieren. Einmal an die Grenzfläche gelangt, orientieren sich die Tensidmoleküle derart, dass sie den energetisch günstigsten Zustand einnehmen. Dabei orientieren sich die unpolaren Enden der Tenside in Richtung auf die unpolare Phase, während die polaren Enden der Tenside sich in entgegengesetzter Richtung orientieren. Hieraus resultiert eine Zeitabhängigkeit der Oberflächenspannung. Dieser dynamische Effekt ergibt sich, da sich im Laufe der Zeit immer mehr Tensidmoleküle an der Oberfläche orientieren können. Die Adsorptionsgeschwindigkeit der Tensidmoleküle ist dabei jedoch i. d. R. langsamer als die Diffusionsgeschwindigkeit der Tensidmoleküle. Will man nun diese Vorgänge genauer untersuchen, ist eine Methode gefragt, die die Werte der Oberflächenspannung bereits für kurze Oberflächenalter liefert. Hierzu eignet sich insbesondere die Methode des maximalen Blasendrucks.

Bei dieser Methode werden mit Hilfe des Blasendrucktensiometers in der zu untersuchenden Flüssigkeit Gasblasen mit einer genau definierten Blasenbildungsrate erzeugt. Die Gasblasen gelangen über eine Kapillare mit bekanntem Durchmesser in die zu untersuchende Flüssigkeit. Mit Hilfe des Blasendrucktensiometers wird die Gasblase in die Flüssigkeit gedrückt. Der hierzu erforderliche Gasdruck erreicht ein Druckmaximum, welches von dem Blasendrucktensiometer festgestellt wird. Das Druckmaximum wird in dem Moment erreicht, in dem der Blasendurchmesser gleich dem Durchmesser der Kapillare wird. Der Maximaldruck der Gasblase ist der dynamischen Oberflächenspannung gemäß folgender Formel direkt proportional:

$$\sigma_d = ((p_{max} - p_0)r)/2$$

wobei $\sigma_d$ die dynamische Oberflächen- oder Grenzflächenspannung zwischen Gas und Flüssigkeit, $p_{max}$ der maximale Blasendruck der Gasblase, $p_0$ der hydrostatische Druck in der Kapillare, und r der innere Radius der Kapillare ist.

Bei der Messung wird das Oberflächenalter dann mit Hilfe des Blasendrucktensiometers erhöht, wodurch sich auch die Zeit zur Bildung einer neuen Grenzfläche automatisch erhöht. In Abhängigkeit von der Kinetik und der Konzentration der untersuchten Tenside ergibt sich dann ein nahezu zeitunabhängiger Verlauf der Oberflächenspannung im Fall sehr beweglicher Tenside bis zu ausgeprägt zeitabhängigem Verhalten der Oberflächenspannung für langsame Tenside.

Derartige Verfahren und Vorrichtungen sind beispielsweise aus dem europäischen Patent EP 0 902 887 B1 bekannt.

Aufgabe der vorliegenden Erfindung ist es, die bekannten Verfahren und Vorrichtungen zu verbessern.

Diese Aufgabe wird erfindungsgemäß durch ein Verfahren gemäß Anspruch 1 und eine Vorrichtung gemäß Anspruch 8 gelöst.

Weiterhin ist es Aufgabe der Erfindung, eine verbesserte Drossel und ein verbessertes Verfahren zur Herstellung einer Drossel zur Verfügung zu stellen.

Diese Aufgabe wird erfindungsgemäß durch eine Drossel nach Anspruch 16 und ein Verfahren zur Herstellung einer Drossel nach Anspruch 18 gelöst.

Die Vorteile der Erfindung liegen insbesondere darin, dass mit Hilfe der erfindungsgemäßen Verfahren und Vorrichtungen eine Messung der dynamischen Oberflächenspannung - zumindest innerhalb sinnvoller Grenzen - unabhängig von der Eintauchtiefe der Kapillare vorgenommen werden kann, da die erfindungsgemäßen Verfahren und Vorrichtungen den minimalen bzw. hydrostatischen Druck direkt erfassen und somit jeweils bei der Berechnung der dynamischen Oberflächenspannung genau berücksichtigen können. Im Stand der Technik wurde der hydrostatischen Druck immer nur indirekt, also bspw. über eine Eintauchtiefenmessung oder Referenzkapillaren erfasst.

Aufgrund der von der Eintauchtiefe unabhängigen Messung ist dank der Erfindung erstmals eine Messung von dynamischen Oberflächenspannungen mit einem Einhandgerät möglich. Denn die bisher im Stand der Technik bekannten Verfahren und Vorrichtungen der eingangs genannten Art, auch die aus der eingangs genannten EP 0 902 887 B1 bekannte Vorrichtung, mussten für eine exakte Bestimmung der Oberflächenspannung in einer Halterung relativ zur Flüssigkeit fixiert werden. Zumindest galt dies für die eigentliche Messkapillare. Dies ist dank der vorliegenden Erfindung nicht mehr notwendig. Denn der minimale Blasen- bzw. hydrostatische Druck wird bei der Erfindung nicht - wie im Stand der Technik - indirekt sondern unmittelbar bestimmt. Daher kann aufgrund der Eintauchtiefenunabhängigkeit der erfindungsgemäßen Verfahren und Vorrichtungen das entsprechende Messgerät freihändig einhändig gehalten werden, ohne dass die Messgenauigkeit leidet.

Vorteilhafte Ausführungsformen der Erfindung verwenden eine Membrandämpfung des Druckspeichers für den zur Verfügung zu stellenden Gasdruck, um mögliche Druckschwankungen, insbesondere der Pumpe, vorteilhaft dämpfen zu können.

Andere Ausführungsbeispiele verwenden eine im wesentlichen zweidimensionale, bevorzugt als kupferkaschierte Leiterplatte ausgebildete Drossel, um eine maximale Entkopplung zwischen der zum Aufbau des Gasdrucks erforderlichen Pumpe und dem am Kapillarende zur Verfügung gestellten Gasdruck zu erreichen. Bei dieser Ausführungsform wird somit ein nahezu pulsationsfreier Volumenstrom am Eingang zur Kapillare erreicht. Dies sorgt dafür, dass eine sehr genaue Bestimmung des minimalen bzw. hydrostatischen Druckes möglich ist.

Weitere bevorzugte Ausführungsformen der vorliegenden Erfindung weisen ein speziell an die Messerfordernisse angepasstes Volumen des in dem Blasendrucktensiometer vorhandenen Gasvolumenstroms auf. So ist eine direkte Bestimmung des minimalen bzw. hydrostatischen Drucks in im Stand der Technik nicht gekannter Präzision möglich. Denn bei einem zu großen Volumen lässt sich der minimale bzw. hydrostatische Druck nicht mehr exakt bestimmen, da die Gasblasen am kapillaren Ende zu schnell abreißen, so dass die Zeit nicht mehr ausreicht, den Druck auf den minimalen bzw. hydrostatischen Druck absinken zu lassen. Gleichzeitig ist jedoch auch ein zu kleines Volumen zu vermeiden, da sonst ein zu steiler Anstieg des Messsignals erfolgt, so dass ebenfalls keine Zeit verbleibt, den minimalen bzw. hydrostatischen Gasdruck bestimmen zu können.

Insgesamt ist somit darauf zu achten, das in dem Gerät vorhandene Gasvolumen so zu wählen, dass unerwünschte dynamische Effekte, die verhindern, dass der minimale bzw. hydrostatische Gasdruck während der Messung erreicht wird, vermieden werden. Eine präzise Anpassung der im Geräteinneren befindlichen Gasvolumina ist notwendig und wird auf den verwendeten Messkopf abgestimmt.

Hierzu haben sich die vorerwähnten, insbesondere im wesentlichen zweidimensionalen, Drosselleiterplatten bzw. -platinen als besonders vorteilhaft erwiesen. Diese können darüber hinaus leicht ausgetauscht und gereinigt werden und sind mit Hilfe der klassischen Photolithographie sehr leicht, beispielsweise in Kupfer, zu ätzen. Für die erfindungsgemäße Herstellung derartiger Drosseln wird unabhängig Schutz beansprucht.

Schließlich können die erfindungsgemäßen Drosselplatinen aufgrund ihrer sehr geringen Baugröße auch in sehr kleine Handgeräte der vorliegenden Art eingebaut werden, so dass problemlos eine Einhandbedienung des erfindungsgemäßen Blasendrucktensiometers möglich ist.

Ebenso kommen Sandwichbauformen in Frage, wie etwa SMD(Surface Mounted Devices)-Lötpastenmasken. Diese können bspw. mit Hilfe eines Laserstrahls hergestellt werden. Auch können hierfür mikrogefräste Metallplatten verwendet werden. Die Vorteile derartiger Drosselplatinen liegen insbesondere darin, dass sowohl die Metallschichtdicke der Drossel, und somit die Höhe der Drosselkanäle, als auch die Ätzbreite der Drosselkanäle variiert werden können. Diese Merkmale erlauben eine besonders günstige Messsignalgestaltung und erleichtern damit auch das Auswerten der Messgrößen.

Eine weitere bevorzugte Ausführungsform der Erfindung weist eine Flügelzellenpumpe zur Erzeugung des Gasdruckes auf. Mit Hilfe einer solchen erstmals bei Blasendrucktensiometern verwendeten Flügelzellenpumpe lässt sich ein sehr konstanter Gasvolumenstrom bei sehr geringer Pulsation des Volumenstromes erreichen. Vor allem lässt sich auch eine sehr geringe Baugröße mit einer derartigen Pumpe erzielen, um so die erforderliche geringe Baugröße für ein mit einer Hand zu bedienendes Gerät zu erreichen. Kombiniert mit einer Membranwand des Druckreservoirs wird eine im Stand der Technik bisher nicht bekannte, nahezu völlige Pulsationsfreiheit des Volumenstroms am Eingang zur Kapillare erzielt.

Vorteilhafte Ausführungsformen der Erfindung haben eine zweite, ggf. zu der ersten hinzuschaltbare, vorteilhaft in einem Stück hergestellte Drossel, um den Messbereich gegebenenfalls erweitern zu können.

Vorteilhaft wird die Kapillare als Wegwerfkapillare ausgebildet, so dass keine Reinigung der Kapillare notwendig ist und immer gewährleistet wird, dass eine präzise Messung ohne Kontamination der kapillaren Spitze erfolgen kann. Die Wegwerfkapillaren sind bevorzugt aus PTFE (Polytetrafluorethylen = Teflon) gefertigt.

Weiter bevorzugt wird eine Kapillarhalterung aus Kunststoff oder Keramik verwendet, um ein leichtes Reinigen bei gleichzeitiger Chemiebeständigkeit der Kapillarhalterung zu ermöglichen. Diese Kapillarhalterungen sind vorzugsweise mit Dichtungen versehen, die die Wegwerfkapillaren halten, so dass bei einer Einhandbedienung des Gerätes ein einfaches Aufschieben der Kapillarhalterung auf eine Wegwerfkapillare in einem Depot von Wegwerfkapillaren mit einer Hand möglich ist.

Vorteilhaft sind alle Bauelemente des erfindungsgemäßen Gerätes in einem einzigen Gehäuse integriert, um eine sichere und einfache Einhandbedienung zu ermöglichen.

Bei anderen bevorzugten Ausführungsformen der Erfindung lässt sich mit Hilfe eines Reglers für die Pumpe der Volumenstrom kontinuierlich oder in Stufen regeln. Der Regler kann dabei mit einer Steuerung verbunden sein, die einen bestimmten Volumenstrombereich automatisch durchfährt.

Andere bevorzugte Ausführungsformen weisen eine Temperaturanzeige zum Bestimmen der Temperatur der zu untersuchenden Flüssigkeit auf.

Weitere bevorzugte Ausführungsformen der Erfindung sind in den Unteransprüchen beschrieben.

Eine bevorzugte Ausführungsform der Erfindung wird nun anhand der Zeichnung erläutert.

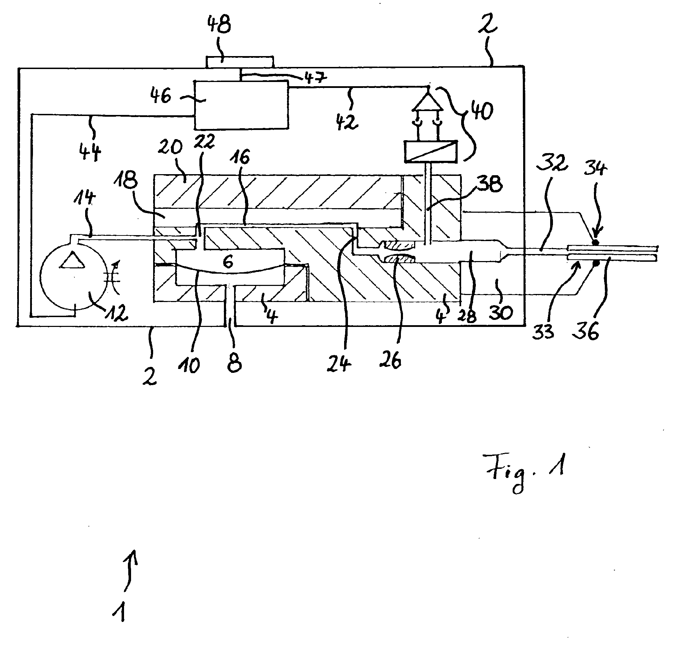

Die einzige Figur 1 der Zeichnung zeigt schematisch eine Ausführungsform eines erfindungsgemäßen Blasendrucktensiometers 1. Das Tensiometer 1 weist ein Gehäuse 2 auf. In dem Gehäuse 2 befindet sich ein Metallblock 4. In dem Metallblock 4 befindet sich ein Druckspeicher 6. Der Druckspeicher 6 ist gegenüber einer nach außerhalb des Gehäuses führenden Öffnung 8 in dem Metallblock 4 durch eine flexible Membran 10 abgegrenzt.

Der Druckspeicher 6 wird mit Hilfe einer Flügelzellenpumpe 12 über eine sich teilweise in dem Metallblock 4 erstreckende Verbindungsleitung 14 mit Druck beaufschlagt. Der Druckspeicher 6 ist weiterhin mit einem Drosselkanal 16 in einer bevorzugt kupferkaschierten, photolithographisch geätzten Drosselplatine 18 verbunden. Die Drosselplatine 18 wird über einen mit Hilfe von nicht dargestellten Schraubverbindungen mit dem Metallblock 4 verbundenen Metallblock 20 an den Metallblock 4 gedrückt und somit gegenüber dem von dem Druckspeicher 6 zu der Drossel führenden Druckkanal 22 und dem von der Drossel wegführenden Druckkanal 24 fixiert.

Von dem Druckkanal 24 gelangt das Gas über eine Verengung 26 in einen im Durchmesser erweiterten Kanal 28, der sich teilweise im Metallblock und teilweise in einem aus PEEK (Polyetheretherketon) gefertigten Kapillarträger 30 befindet. Alternativ kann der Träger 30 aus Keramik hergestellt sein.

Anschließend verengt sich der Kanal 28 zu einem engeren Abschnitt 32. Dieser weist an seinem kapillarseitigen Endabschnitt 33 einen aufgeweiteten Durchmesser zur Aufnahme einer einsteckbaren Kapillare 36 auf. Die Kapillare 36 wird am Ende des Kanals 32 lösbar mittels einer als Halterung dienenden Ringdichtung 34 gehalten.

Der Druck in dem erweiterten Kanal 28 wird mit Hilfe eines mit dem erweiterten Kanal 28 über einen in dem Metallblock 4 ausgebildeten Verbindungskanal 38 von einem Drucksensor 40 erfasst.

Der Drucksensor 40 und die Pumpe 12 sind über Leitungen 42 bzw. 44 mit einer Steuerungs- bzw. Auswerteeinheit 46 verbunden.

Die Auswerteeinheit 46 ist wiederum über eine Verbindungsleitung 47 mit einer außen am Gehäuse 2 angeordneten Anzeige- und Eingabeeinheit 48 verbunden.

Das Gehäuse 2 ist so ausgebildet, dass es mit einer Hand getragen werden kann. Aus dem Gehäuse 2 ragt nur die Kapillare 36 und ein Teil des Kapillarenträgers 30 heraus.

**Patentansprüche**

1. Verfahren zur Messung der dynamischen Oberflächenspannung einer Flüssigkeit nach der Methode des maximalen Blasendrucks,
   **dadurch gekennzeichnet, dass** zur Bestimmung des hydrostatischen Drucks der minimale Blasendruck unmittelbar gemessen wird.

2. Verfahren nach Anspruch 1,
   wobei die Messung mit einer Hand durchgeführt wird.

3. Verfahren nach einem der vorstehenden Ansprüche,
   wobei der zur Messung verwendete Gasvolumenstrom elastisch gedämpft wird.

4. Verfahren nach einem der vorstehenden Ansprüche,
   wobei der zur Messung verwendete Gasvolumenstrom im wesentlichen frei von Druckschwankungen und/oder Pulsationen zur Verfügung gestellt wird.

5. Verfahren nach einem der vorstehenden Ansprüche,
   wobei zur Messung ein Gasvolumenstrom mit einem im wesentlichen an die Messerfordernisse der Messung angepassten Volumen verwendet wird.

6. Verfahren nach einem der vorstehenden Ansprüche,
   wobei die Erzeugung des zur Messung verwendeten Gasvolumenstroms gegenüber des eine Blase zur Bestimmung des maximalen bzw. minimalen Blasendrucks erzeugenden Gasvolumenstroms im wesentlichen entkoppelt ist.

7. Verfahren nach einem der vorstehenden Ansprüche,
   wobei der Gasvolumenstrom zur Entkopplung gedrosselt wird.

**8.** Vorrichtung zur Messung der dynamischen Oberflächenspannung einer Flüssigkeit nach der Methode des maximalen Blasendrucks, insbesondere tragbares Einhandgerät zur Messung der dynamischen Oberflächenspannung einer Flüssigkeit nach der Methode des maximalen Blasendrucks, **gekennzeichnet durch** einen Sensor (40) zur unmittelbaren Bestimmung des hydrostatischen Drucks **durch** Messung des minimalen Blasendrucks.

**9.** Vorrichtung nach Anspruch 8,
wobei die Vorrichtung (1) ausschließlich mit einer Hand bedienbar und/oder tragbar ist.

**10.** Vorrichtung nach einem der vorstehenden Ansprüche 8 oder 9,
wobei ein Membran (10) zur elastischen Dämpfung des zur Messung dienenden Gasvolumenstroms, insbesondere eines Reservoirs (6) zur Speicherung des zur Messung dienenden Gasvolumenstroms, vorgesehen ist.

**11.** Vorrichtung nach einem der vorstehenden Ansprüche 8-10,
wobei eine Drossel (18) zum Ausgleich von Druckschwankungen des zur Messung dienenden Gasvolumenstroms vorgesehen ist.

**12.** Vorrichtung nach Anspruch 11,
wobei die, insbesondere im wesentlichen, bevorzugt in Form einer kupferkaschierten Leiterplatte ausgebildete, zweidimensionale, Drossel (18) ein im wesentlichen an die Messerfordernisse der Messung und/oder eine Messkopf (36) angepasstes Volumen des Gasvolumenstroms zur Verfügung stellt.

**13.** Vorrichtung nach einem der vorstehenden Ansprüche 11 oder 12,
wobei die Drossel (18) einen Ort (12) zur Erzeugung des zur Messung verwendeten Gasvolumenstroms gegenüber einem Ort (36) zur Bestimmung des maximalen bzw. minimalen Blasendrucks im wesentlichen entkoppelt.

**14.** Vorrichtung nach einem der vorstehenden Ansprüche 8-13,
wobei eine Flügelzellenpumpe (12) zur Erzeugung des Gasvolumenstroms vorgesehen ist.

**15.** Vorrichtung nach einem der vorstehenden Ansprüche 8-14,
wobei eine Kapillare (36) zur Bestimmung des maximalen bzw. minimalen Blasendrucks vorgesehen ist.

**16.** Drossel, insbesondere Drossel (18) einer Vorrichtung zur Messung der dynamischen Oberflächenspannung einer Flüssigkeit nach der Methode des maximalen Blasendrucks,
**dadurch gekennzeichnet, dass** die Drossel (18) die Form einer Platine, bevorzugt einer im wesentlichen in Schichtbauweise hergestellten Platine, aufweist.

**17.** Drossel nach Anspruch 16,
wobei die Drossel (18) eine SMD-Lötpastenmaske und/oder eine mikrogefräste Metallplatte aufweist.

**18.** Verfahren zur Herstellung einer Drossel (18), insbesondere einer Drossel (18) einer Vorrichtung zur Messung der dynamischen Oberflächenspannung einer Flüssigkeit nach der Methode des maximalen Blasendrucks, mit den Schritten:

die Drossel (18) wird in Form einer Platine im wesentlichen in Schichtbauweise hergestellt.

**19.** Verfahren nach Anspruch 18, mit den weiteren Schritten:

die Drossel (18) wird durch ein photolithographisches Verfahren, durch Lasern von SMD-Lötpastenmasken und/oder durch Fräsen von Metall hergestellt.

Fig. 1

**Europäisches Patentamt**

## EUROPÄISCHER RECHERCHENBERICHT

Nummer der Anmeldung

EP 03 00 7670

| | | EINSCHLÄGIGE DOKUMENTE | | | |
|---|---|---|---|---|---|
| | Kategorie | Kennzeichnung des Dokuments mit Angabe, soweit erforderlich, der maßgeblichen Teile | | Betrifft Anspruch | KLASSIFIKATION DER ANMELDUNG (Int.Cl.7) |
| 1 | X | FAINERMAN V B ET AL: "THE MEASUREMENT OF DYNAMIC SURFACE TENSION BY THE MAXIMUM BUBBLE PRESSURE METHOD" COLLOID & POLYMER SCIENCE, DARMSTADT, DE, Bd. 272, Nr. 6, 1. Juni 1994 (1994-06-01), Seiten 731-739, XP000614882 * Seite 732 - Seite 734 * | | 1,8 | G01N13/02 |
| 2 | X | EP 1 154 255 A (MIELE & CIE) 14. November 2001 (2001-11-14) * Spalte 3, Zeile 44 - Spalte 5, Zeile 9; Abbildungen 1,2 * | | 1-15 | |
| 2 | X | DE 196 36 644 C (UNIV DRESDEN TECH) 3. Juli 1997 (1997-07-03) * Spalte 3, Zeile 35 - Spalte 4, Zeile 16; Abbildungen 1,2 * | | 1-15 | |
| 2 | X | DE 43 03 133 A (HENKEL KGAA) 11. August 1994 (1994-08-11) * Anspruch 2 * | | 1,8 | RECHERCHIERTE SACHGEBIETE (Int.Cl.7) |
| 2 | A | DD 250 363 A (ERFURT KUEHLMOEBELWERK) 8. Oktober 1987 (1987-10-08) * das ganze Dokument * | | 3,10 | G01N |

~~Der vorliegende Recherchenbericht wurde für alle Patentan~~sprüche erstellt

| Recherchenort | Abschlußdatum der Recherche | Prüfer |
|---|---|---|
| München | 7. August 2003 | Purdie, D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches**
**Patentamt**

Nummer der Anmeldung

EP 03 00 7670

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-15

**Europäisches**
**Patentamt**

**MANGELNDE EINHEITLICHKEIT**
**DER ERFINDUNG**
**ERGÄNZUNGSBLATT B**

Nummer der Anmeldung

EP 03 00 7670

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-15

 Anspruch 1 bzw. 8 beschreibt ein Verfahren bzw. eine Vorrichtung zur Messung der dynamischen Oberflächenspannung einer Flüssigkeit.

 ---

2. Ansprüche: 16-19

 Anspruch 16 bzw. 18 beschreibt eine Drossel bzw. ein Verfahren zur Herstellung einer Drossel. Die in Anspruch 16 definierete Drossel weist die Forme einer Platine auf. Sie ist aber ansonsten nicht näher beschrieben.

 ---

**ANHANG ZUM EUROPÄISCHEN RECHERCHENBERICHT
ÜBER DIE EUROPÄISCHE PATENTANMELDUNG NR.**   EP 03 00 7670

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-08-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 1154255 | A | 14-11-2001 | DE | 10022863 A1 | 22-11-2001 |
| | | | AT | 250219 T | 15-10-2003 |
| | | | DE | 10152832 A1 | 08-05-2003 |
| | | | DE | 50100631 D1 | 23-10-2003 |
| | | | EP | 1154255 A2 | 14-11-2001 |
| DE 19636644 | C | 03-07-1997 | DE | 29609646 U1 | 14-08-1996 |
| | | | DE | 19636644 C1 | 03-07-1997 |
| | | | AU | 3025297 A | 05-01-1998 |
| | | | BR | 9709446 A | 10-08-1999 |
| | | | WO | 9746863 A1 | 11-12-1997 |
| | | | EP | 0902887 A1 | 24-03-1999 |
| | | | JP | 2000504117 T | 04-04-2000 |
| | | | JP | 3263400 B2 | 04-03-2002 |
| | | | US | 6185989 B1 | 13-02-2001 |
| DE 4303133 | A | 11-08-1994 | DE | 4303133 A1 | 11-08-1994 |
| | | | AT | 156403 T | 15-08-1997 |
| | | | DE | 59403654 D1 | 11-09-1997 |
| | | | WO | 9417954 A1 | 18-08-1994 |
| | | | EP | 0682588 A1 | 22-11-1995 |
| | | | ES | 2105638 T3 | 16-10-1997 |
| DD 250363 | A | 08-10-1987 | DD | 250363 A1 | 08-10-1987 |

EPO FORM P0461

Für nähere Einzelheiten zu diesem Anhang : siehe Amtsblatt des Europäischen Patentamts, Nr.12/82